# EUROPÄISCHE PATENTANMELDUNG

(11) **EP 2 143 363 A1**
(43) Veröffentlichungstag der Anmeldung: **13.01.2010**
(21) Anmeldenummer: 09174134.8
(22) Anmeldetag: 27.10.2009
(51) Int. Cl.: A47J 39/00

(54) **Regeneriergerät**

(71) Anmelder: Hugentobler Schweizer Kochsysteme AG, 3515 Oberdiessbach (CH)
(72) Erfinder: Hugentobler, Reto, CH-3604, Thun (CH)
(74) Vertreter: AMMANN PATENTANWÄLTE AG BERN

(57) **Zusammenfassung**

Ein Gerät (1) zum Regenerieren von Speisen umfasst eine Umluftheizung (20), an die sich seitlich Luftleiteinrichtungen (56) anschliessen, um eine Umlenkung des Luftstromes, der von der Umluftheizung (20) ausgeht, in Richtung auf den Behandlungsraum (5) des Gerätes (1) zu bewirken. Es resultiert ein milderes Regenerierungsklima, das eine einfachere Handhabung des Geräts und insbesondere auch wesentliche Abweichungen von Behandlungsparametern wie Verweilzeit im Gerät ohne spürbare Qualitätseinbussen der behandelten Speisen gestattet. Zur Erzeugung von Dampf besteht eine Wasserzufuhreinrichtung (35, 39), um Wasser zum Zwecke der Verdampfung in das Gerät einzuleiten.

## Beschreibung

Die vorliegende Erfindung bezieht sich auf ein Regeneriergerät für Speisen gemäss Oberbegriff des Patentanspruchs 1.

Regeneriergeräte für Speisen dienen dazu, vorgefertigte und gegarte Lebensmittel oder Menüs zu regenerieren, d.h. auf eine Temperatur zu erwärmen, die einer frisch zubereiteten Mahlzeit entspricht. Dabei muss vermieden werden, dass die Effekte, die bei einfachem Aufwärmen entstehen, vermieden werden, wie Geschmacksveränderungen, Austrocknen und allgemein Änderungen in Konsistenz und Aussehen.

Bekannt ist, Speisen in sogenannten Kombi-Steamern zu regenerieren. Kombi-Steamer sind dabei Öfen, die eine Umlufteinrichtung mit Heizung in Verbindung mit einer Dampferzeugungseinrichtung aufweisen. Die bekannten Geräte sind jedoch aufwendig zu installieren und verlangen genau instruiertes Bedienungspersonal. Die aufwendige Installation ist eine Folge davon, dass diese Geräte einen Anschluss für fliessendes Wasser und einen Ablauf benötigen. Die Heizung weist auch oft eine Leistung auf, die einen Anschluss an eine Kraftstromsteckdose erfordert. Bei der Bedienung sind die eingestellten Garzeiten genau einzuhalten, da die Kombi-Steamer in erster Linie zum Garen ausgelegt sind und in ihrem Inneren eine "agressive" Garumgebung herrscht, um den Anforderungen an professionelles Garen, insbesondere kurze Zeiten, gerecht zu werden.

Die bekannten Geräte sind zur Aufnahme der genormten, rechteckigen Schalen (Gastro-Norm [GN-Norm]) ausgelegt. Zu regenerierende Speisen bzw. Menüs sind jedoch oft schon auf Tellern angerichtet, die sich nur mit geringer Effizienz auf rechteckigen Grundflächen anordnen lassen.

Eine Aufgabe der vorliegenden Erfindung besteht darin, ein Regeneriergerät für Speisen anzugeben, das speziell für die Aufgabe der Regenerierung ausgelegt ist und damit geringere Anforderungen an die Installation stellt. Eine andere, bevorzugt ebenfalls zu lösende Aufgabe besteht darin, ein solches Gerät anzugeben, das geringere Anforderungen an die Einhaltung der Bedienungsregeln erfordert.

Ein derartiges Gerät ist im Patentanspruch 1 angegeben. Die weiteren Patentansprüche geben bevorzugte Ausführungsformen an.

Das erfindungsgemässe Gerät zeichnet sich demnach durch eine Umluftheizung aus. Diese Umluftheizung umfasst eine Umlufteinrichtung, die für eine Luftzirkulation im Behandlungsraum sorgt. Die Luft wird durch eine Heizung erwärmt, wobei sich die Heizung im Bereich der Luft befindet, die von der Umlufteinrichtung wegströmt. Eine Wasserzufuhr leitet Wasser auf die Umlufteinrichtung, um es zu verdampfen. Bevorzugt wird dabei das Wasser auf einen Ventilator der Umlumfteinrichtung gegeben, der sie dann auf die Heizung schleudert für eine effektive und schnelle Verdampfung.

Erfindungsgemäss weist das Gerät zusätzlich Luftleiteinrichtungen auf, die den Luftstrom, der von der Umlufteinrichtung abgegeben wird, in Richtung auf den Behandlungsraum umlenkt. Bevorzugt wird dies durch einen entsprechend gewählten Querschnitt des Behandlungsraumes erzielt, im weitesten Sinne eine Annäherung an eine runde Form, z.B. durch Auffüllen von Ecken durch schräge Flächen. In der Praxis ergab sich hierdurch in einem überraschenden Masse, dass eine geringere Leistung der Umlufteinrichtung benötigt wird, um im Garraum eine hinreichend einheitliche Regenerierumgebung herzustellen. Durch die verringerte Luftzirkulation ergeben sich insgesamt sanftere Behandlungsbedingungen. Eine Folge davon ist, das Abweichungen von den vorgeschriebenen Behandlungszeiten, namentlich Überschreitungen, wesentlich geringeren oder keinen merklichen Einfluss haben. Z.B. hatte eine Behandlungszeit von 10 min. statt vorgeschriebenen 5 min. nur geringen Einfluss auf die regenerierten Speisen, während eine solche Überschreitung in einem bekannten Kombi-Steamer dramatische Folgen hat.

Diese Toleranz in den Behandlungszeiten führt auch dazu, dass es möglich ist, weitere Speisen in das Gerät einzustellen, während bereits eine Regenerierung läuft, also Speisen zeitlich überlappend zu regenerieren.

Die genannte, bevorzugte Anpassung des Querschnitts an eine runde Form ist auch im Hinblick darauf vorteilhaft, dass zu regenerierende Speisen oft auf Tellern angerichtet sind. Der Garraum ist damit besser an die Form der "Behälter" der Speisen angepasst.

Die Erfindung soll weiter an einem bevorzugten Ausführungsbeispiel unter Bezugnahme auf Figuren erläutert werden. Es zeigen:
- Fig. 1: eine räumliche Gesamtansicht eines erfindungemässen Regeneriergerätes;
- Fig. 2: eine Frontalansicht des Regeneriergerätes;
- Fig. 3: einen vertikalen Schnitt gemäss III-III in Fig. 2;
- Fig. 4: eine schematisierte Version der Fig. 3;
- Fig. 5: horizontaler Schnitt gemäss V-V in Fig. 4;
- Fig. 6: Darstellung wie Fig. 5 mit anderer Türkonstruktion.

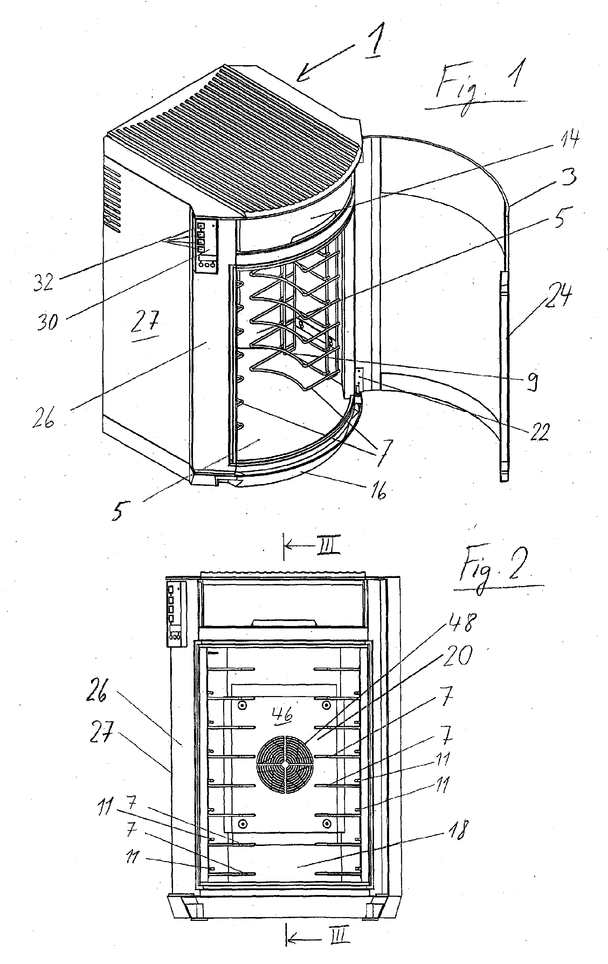

Fig. 1 zeigt eine Aussenansicht eines erfindungsgemässen Regeneriergerätes 1. Seine Vorderfront besteht im Wesentlichen aus der gebogenen Tür 3, die den Behandlungsraum 5 verschliesst. Sie ist in offener Stellung dargestellt. Im Inneren des Behandlungsraumes 5 befinden sich übereinander eine Anzahl Telleraufnahmen 7. Jede Telleraufnahme 7 besteht aus zwei an gegenüberliegenden Seitenwänden auf gleicher Höhe angeordneten Bügeln mit konkav ausgebildeltem Frontstab 9. Durch diese konkave Formgebung des Frontstabes 9 sind die Telleraufnahmen an die generell runde Form von Tellervertiefungen angepasst und erlauben somit eine genaue, selbstzentrierende Aufnahme je eines Tellers pro Telleraufnahme.

Etwas nach oben versetzt über den Telleraufnahmen 7 - ausser der obersten - befinden sich zusätzliche, flachere Führungsbügel 11. Zwischen den Frontstäben 9 und den Führungsbügeln 11, die eine rechteckige Form aufweisen, können Gitter der GN-Norm gelegt werden, auf die andere Speisenbehälter und auch kleinere, genormte Speisenschalen der Gastronomie angeordnet werden können. Dank dem Führungsbügel 11 sind die Gitter beim Herausziehen kippgeschützt. Damit ist es möglich, im Regeneriergerät 1 sowohl Teller, z.B. mit vorbereiteten Tellermenüs, oder auch Speiseschalen anzuordnen.

Oberhalb des Behandlungsraumes 5 ist ein Wasserbehälter 14 angeordnet, der den Wasservorrat für die Verdampfungseinrichtung aufnimmt. Unterhalb des Behandlungsraumes befindet sich eine Abwasserschale 16 für Wasser, das aus dem Behandlungsraum abläuft. An der Rückwand 18 ist die Umluftheizung 20 mit Ventilator 42, Heizung 44 und Verdampfungseinrichtung angeordnet. Die Tür 3 weist einen Magnetverschluss auf, u.a. aus hygienischen Gründen. Dazu ist an der dem Scharnier 22 gegenüberliegenden Kante 24 ein weitgehend von oben nach unten durchlaufender magnetischer Metallstreifen angebracht. In der entsprechenden Vorderfläche 26 der Seitenwand 27 des Regeneriergerätes 1 sind die Magnete angeordnet, die zusammen mit dem genannten magnetischen Streifen den Magnetverschluss bilden. Derartige Magnetverschlüsse sind bei den bekannten Kombi-Steamern nicht üblich, da die hohen Temperaturen, die bei derartigen Geräten auftreten, die Kraft von Magneten auf Dauer zerstören. Beim Regeneriergerät 1 treten im Innenraum 5 Temperaturen von bis zu 160 °C auf, was im Inneren der Seitenwand zu Temperaturen von höchstens 80 °C führt. Solche Temperaturen sind für Dauermagnete jedoch noch zulässig. Damit ist beim erfindungsgemässen Regeneriergerät 1 im Gegensatz zu bekannten Kombigeräten der hygienisch vorteilhaftere und einfacher zu bedienende Magnetverschluss verwendbar im Gegensatz zu den bekannten Verriegelungsmechanismen, die das Betätigen mit einer zusätzlichen Handbewegung erfordern.

Im oberen Bereich der Vorderfläche 26 ist ein Bedienfeld 30 angeordnet. Vorzugsweise weist es eine Anzahl Tasten 32 auf, z.B. drei, die das direkte Anwählen von drei verschiedenen Regenerierklimas durch einfachen Tastendruck erlauben. Im einfachsten Fall sind die zu regenerierenden Speisen mit einer entsprechenden Markierung (Farbmarke, Nummer oder Ähnliches) versehen, die ohne Weiteres angibt, welche der Tasten 30 für das Regenerieren der Speise zu betätigen ist. Für das Einstellen der Klimas oder spezielle Regenerierprozeduren kann das Gerät auch eingerichtet sein, dass durch besondere Tasten oder eine spezielle Betätigung der Tasten ein Modus des Bedienfeldes aktiviert werden kann, der einen weitergehenden Zugriff auf die einzelnen Einstellmöglichkeiten und Parameter des Regeneriergerätes 1 erlaubt.

Hauptparameter der Regenerierprozeduren sind die Innentemperatur und die Verweilzeit der Speise, die Stärke der Wasserzufuhr zur Verdampfungseinrichtung sowie die Geschwindigkeit des Ventilators.

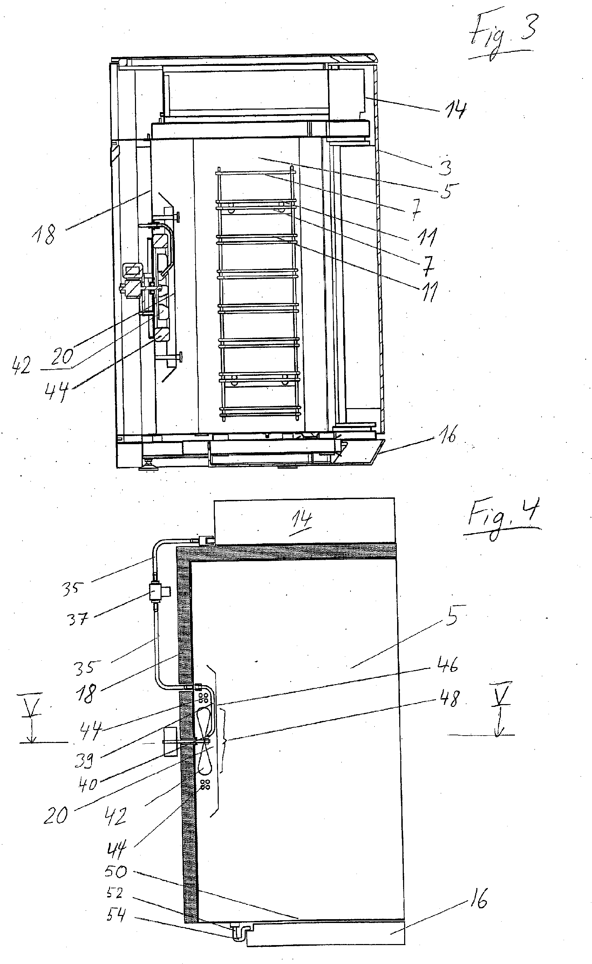

Fig. 4 zeigt einen schematischen Schnitt analog Fig. 3 in vertikaler Richtung (s. III-III in Fig. 2) durch das Regeneriergerät 1. Entsprechende Komponenten sind hier mit gleichen Bezugszeichen wie in den realistischen Fig. 1 bis 3 versehen. Vom Wasserbehälter 14 führt eine Wasserleitung 35 über ein Magnetventil 37 durch die Rückwand 18 in den Behandlungsraum 5. Es ist ein Tröpfelrohr 39 angeschlossen, von dessen freien Ende 40 Wasser auf die Flügel des Ventilators 42 fallen. Von diesen werden sie auf die Heizstäbe der Heizung 44 geschleudert, wo die auftreffenden, kleinen Tröpfchen praktisch sofort verdampfen. Die Heizung 44 umgibt kreisförmig den Ventilator 42. Zur Herstellung eines radial vom Ventilator 42 wegführenden Luftstromes und auch aus sicherheitstechnischen Gründen (Berührungsschutz) ist die Umluftheizung 20 (Ventilator 42, Heizung 44) mit einer Abschirmplatte 46 abgedeckt, die im Bereich des Ventilators 42 mit Durchbrüchen (Löchern, Schlitzen) oder einem Gitter 48 (s. Fig. 2) versehen ist, um Luft zum Ventilator 42 durchtreten zu lassen. Ein Teil des so gebildeten Dampfes schlägt sich an den Wänden des Behandlungsraumes 5 nieder und sammelt sich am Boden 50. Dort befindet sich ein Ablauf 52 mit Siphon 54, durch den das gesammelte Wasser in die Abwasserschale 16 ablaufen kann.

Wasserbehälter 14 wie auch Abwasserschale 16 sind aus dem Gerät entnehmbar, um sie auffüllen bzw. entleeren zu können.

Der Wasserzulauf durch die Leitung 35 erfolgt allein unter der Wirkung der Schwerkraft. Das Magnetventil 37 wird durch die Steuerung (nicht dargestellt), die mit dem Bedienfeld 30 in Verbindung steht gesteuert und ist von einer Bauart, die eine Einstellung des Wasserdurchflusses gestattet. Eine übliche Zufuhrmenge ist ein Zehntel Liter pro Minute.

Die Steuerung kontrolliert auch die Heizung 44 und den Ventilator 42. Es hat sich gezeigt, dass für eine schonende Regenerierung, die selbst wesentliche Abweichungen von den vorgesehenden Verweilzeiten ohne oder ohne wesentliche Beeinträchtigung der Qualität der Speisen gestattet, es vorteilhaft ist, wenn Wasserzufuhr, Heizperiode und Lüfteraktivität aufeinander abgestimmt sind (sogenannte "Hold-Funktion"). Insbesondere ist die Steuerung so eingestellt, dass der Ventilator 42, gegebenenfalls mit geringfügigem Vor- oder Nachlauf bzw. verzögertem Einschalten oder vorzeitigem Abschalten, nur läuft, wenn auch die Heizung 44 eingeschaltet ist. Dadurch ergibt sich ein Zustand ohne Luftströmung bei abgeschalteter Heizung, während der die Speisen unter der heissen, mit Dampf angereicherten Atmosphäre liegen. Es hat sich gezeigt, dass dieses sogenannte "Takten" einen wesentlichen Faktor der angestrebten, sanften Regenerierungsbedingungen darstellt.

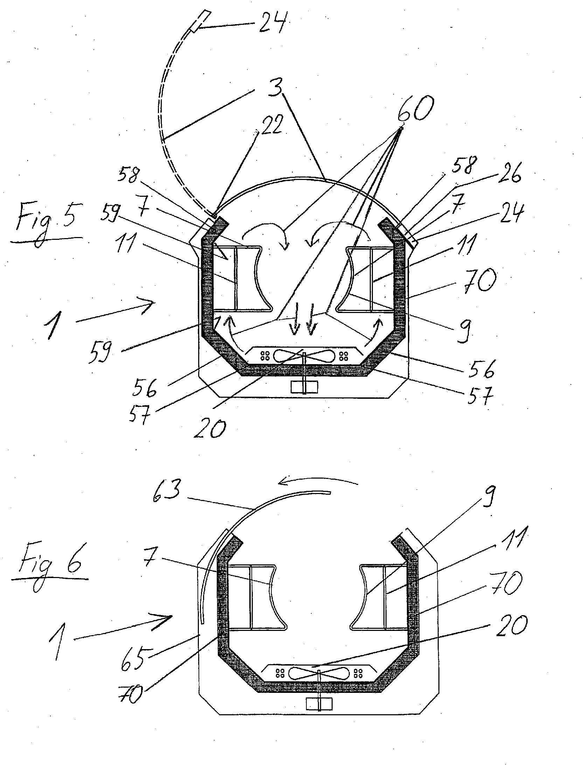

Die schematisierten Schnitte der Fig. 5 und 6 verdeutlichen eine zweite, grundlegende Massnahme zur Herstellung eines schonenden Regenerierungsklimas: Angrenzend an die Umlufteinrichtung 20 befinden sich schräg nach vorne verlaufende Wandabschnitte 56. Diese Wandabschnitte 56 bewirken eine Lenkung des Luftstromes, der vom Ventilator radial nach aussen entlang der Rückwand 18 erzeugt wird, nach vorne in Richtung auf die Tür. Dort wird die Luft, verstärkt durch die ebenfalls schrägen vorderen Wandabschnitte 59, zur Mitte abgelenkt, wo sie wieder zur Umlufteinrichtung zurückströmt. Durch diese Massnahmen, namentlich die hinteren, schrägen Wandabschnitte 56, wird vermutlich eine verbesserte Luftströmung, z.B. gemäss Pfeilen 60, erreicht. Jedenfalls wurde beobachtet, dass so die Lüfterleistung und damit auch die Heftikeit der Luftbewegung wesentlich reduziert werden konnte, was zu einem wesentlich milderen Regenerierungsklima führt.

Der Winkel an den Ecken 57 zwischen Rückwand 18 und Wänden 56 beträgt mindestens 110° und bevorzugt mindestens 120°. Auch die weiteren Ecken 59 des Behandlungsraums weisen im Beispiel Winkel deutlich grösser als 90° auf. Die Winkel an den genannten Ecken müssen nicht identisch sein. Im Beispiel beträgt der Winkel ca. 135°.

In der Fig. 5 ist ein weiterer Vorteil der gebogenen Tür 3 zu erkennen. Berücksichtigt man, dass wegen der runden Form von Tellern eine gerade Tür in etwa tangential am Scheitel der Tür 3 parallel zur Rückwand 18 angeordnet sein müsste, so ergibt sich ohne Weiteres, dass das Scharnier 22 entsprechend der Rundung nach hinten verlegt ist und damit auch die Tür 2 weniger weit in den Raum vor dem Gerät 1 hinausragt, wenn sie geöffnet (gestrichelt dargestellt) ist.

Fig. 6 zeigt eine denkbare Variante für die Tür 3. Sie ist hier als Schiebetür 63 ausgeführt, die in einen Zwischenraum zwischen der seitlichen Aussenwand 65 und die Wand 70 des Behandlungsraumes 5 hinein geschoben werden kann. Diese Tür benötigt zwar praktisch keinen zusätzlichen Freiraum vor dem Gerät, führt aber zu einer grösseren Breite des Gerätes selbst. Ausserdem erfordern derartige Schiebetüren in der Regel aufwendigere Massnahmen zur Abdichtung des Behandlungsraumes 5.

Im Hinblick auf die oben erwähnte Taktung, wobei lange Stillstandsphasen vorteilhaft sind, ist der Behandlungsraum mit einer Wärmeisolation versehen, die durch die dicke Darstellung der Wand 70 angedeutet ist.

Aus der vorangehenden Beschreibung sind dem Fachmann zahlreiche Abwandlungen und Ergänzungen zugänglich, ohne den Schutzbereich der Erfindung zu verlassen, der durch die Patentansprüche definiert ist. Denkbar ist z.B.:
- Ein Wasseranschluss für eine direkte Wasserzufuhr, wo ein solcher vorhanden ist, oder auch eine Möglichkeit für einen direkten Wasserablauf, wo ein solcher zur Verfügung steht.
- Ein kontinuierlicher Übergang zwischen Rückwand 18 und anschliessenden Seitenwänden in Annäherung an einen Behandlungsraum mit näherungsweise kreisbogenartigem Querschnitt seiner Wand 70, im Extremfall auch insgesamt ein im Wesentlichen kreisbogenförmiger Querschnitt.

Zusätzlich zu dem Vorteil der einfachen Bedienung und der vergrösserten Toleranz insbesondere gegen auch wesentliche Überschreitungen der Regenerierzeit durch verspätete Entnahmen des Guts ist es auch möglich, während einer Regenerierung weitere Speisenbehälter, z.B. einen Teller, in das Gerät einzustellen. Umgekehrt ist es auch möglich, eine früher eingestellte Speise oder eine kürzer zu regenerierende Speise zu entnehmen, während andere Speisen im Gerät verbleiben.

## Patentansprüche

1. Regeneriergerät (1) für Speisen mit einem Behandlungsraum (5), in dem eine Umlufteinrichtung (42), eine Heizeinrichtung (44) und eine Wasserzufuhreinrichtung (14, 35, 37, 39) angeordnet sind, **dadurch gekennzeichnet, dass** die Wand des Behandlungsraums Luftleitmittel (56) aufweist, um von der Umlufteinrichtung wegströmende Luft wirksam zum Behandlungsraum zu lenken und damit eine gleichmässigere Luftbewegung im Behandlungsraum zu erhalten.

2. Regeneriergerät (1) gemäss Anspruch 1, **dadurch gekennzeichnet, dass** die Luftleitmittel (56) als eine im horizontalen Schnitt polygonale und/oder abgerundete Form der Wand (70) des Behandlungsraums (5) ausgebildet sind.

3. Regeneriergerät (1) gemäss einem der Ansprüche 1 bis 2, **dadurch gekennzeichnet, dass** wenigstens die der Umlufteinrichtung (42) benachbarten Wandecken (57), bevorzugt jeweils auch die darauffolgenden Ecken (59), Winkel von mindestens 110°, bevorzugt mindestens 120°, bilden.

4. Regeneriergerät (1) gemäss einem der Ansprüche 1 bis 3, **dadurch gekennzeichnet, dass** der Behandlungsraum (5) eine Tür (3) für Speisen aufweist, wobei die Tür gerundet ausgeführt ist für eine konkave Form des Behandlungsraum (5), wobei die Rundungsachse in etwa senkrecht zur allgemeinen Richtung der von der Umlufteinrichtung (20) und der Luftleitmittel (56) erzeugbaren Luftströmung steht, um die Strömung zu begünstigen, und die Tür entweder an einer Seite schwenkbar am Regeneriergerät zum Öffnen und Schliessen angelenkt ist oder als Schiebetür (63) ausgebildet ist, um den Platzbedarf für die Türbewegung zu verringern.

5. Regeneriergerät (1) gemäss Anspruch 4, **dadurch gekennzeichnet, dass** die Tür (3) einen Magnetverschluss aufweist.

6. Regeneriergerät (1) gemäss einem der Ansprüche 1 bis 5, **dadurch gekennzeichnet, dass** die Umlufteinrichtung einen Ventilator (42) umfasst, ein Auslass (40) der Wasserzufuhreinrichtung (14, 35, 37, 39) über der Umlufteinrichtung angeordnet ist, so dass Wasser auf die Umlufteinrichtung gelangt, und die Heizeinrichtung (44) benachbart zur Umlufteinrichtung, bevorzugt um die Umlufteinrichtung herum, angordnet ist, um von der Wasserzufuhreinrichtung (14, 35, 37, 39) auf die Umlufteinrichtung fallendes Wasser auf die Heizeinrichtung schleudern und von dieser in Dampf verwandeln zu können.

7. Regeneriergerät (1) gemäss einem der Ansprüche 1 bis 6, **dadurch gekennzeichnet, dass** über dem Behandlungsraum (5) ein Wasserbehälter (14) angeordnet ist, der mit der Wasserzufuhreinrichtung (14, 35, 37, 39) verbunden ist, so dass Wasser aus dem Wasserbehälter schwerkraftgetrieben durch die Wasserzufuhreinrichtung (14, 35, 37, 39) fliessen kann.

8. Regeneriergerät (1) gemäss einem der Ansprüche 1 bis 7, **dadurch gekennzeichnet, dass** eine Steuerung wenigstens für die Heizeinrichtung (44) und die Umlufteinrichtung (42) vorhanden ist, wobei die Steuerung eingerichtet ist, die Umlufteinrichtung eine vorbestimmte Zeit vor oder nach einem Ausschalten der Heizeinrichtung auszuschalten, um ein Austrocknen von Speisen zu vermeiden.

9. Regeneriergerät (1) gemäss einem der Ansprüche 1 bis 8, **dadurch gekennzeichnet, dass** im Behandlungsraum (5) eine Mehrzahl übereinander angeordneter Aufnahmen (7) für Teller angeordnet sind, wobei eine Aufnahme zwei Bügel mit konkaver Form generell komplementär zu einem Tellerumfang umfasst, die an im wesentlichen gegenüberliegenden Stellen des Behandlungsraum und beidseits einer Tür (3) des Behandlungsraum angebracht sind, um einen Teller darauf abstellen zu können.
